# EUROPEAN PATENT SPECIFICATION

(11) **EP 4 310 211 B1**
(45) Date of publication and mention of the grant of the patent: **03.09.2025**
(21) Application number: 23186541.1
(22) Date of filing: 19.07.2023
(51) Int. Cl.: C22C 1/02, C22C 21/02, C22F 1/043, B62D 25/10, B62D 29/00

(54) **6XXX-SERIES ALUMINUM ALLOY SHEET FOR INNER PANEL OF HOOD, AND PREPARATION METHOD AND USE THEREOF**
6XXX-SERIEN-ALUMINIUMLEGIERUNGSBLECH FÜR EINE INNENPLATTE EINER HAUBE SOWIE HERSTELLUNGSVERFAHREN UND VERWENDUNG DAVON
TÔLE D'ALLIAGE D'ALUMINIUM DE SÉRIE 6XXX POUR PANNEAU INTERNE DE CAPOT, ET SON PROCÉDÉ DE PRÉPARATION ET SON UTILISATION

(30) Priority: 20.07.2022 CN 202210850407
(43) Date of publication of application: 24.01.2024
(73) Proprietor: Chinalco Materials Application Research Institution Co., Ltd., Beijing 102209 (CN); Chinalco Advanced Manufacturing Co., Ltd., Chongqing 400039 (CN)
(72) Inventor: SHI, Xiaocheng, Changping District, Beijing, 102209 (CN); ZHAO, Jingwei, Changping District, Beijing, 102209 (CN); ZHAO, Pizhi, Changping District, Beijing, 102209 (CN); LIU, Zhenshan, Changping District, Beijing, 102209 (CN); LI, Xiulei, Changping District, Beijing, 102209 (CN); SONG, Xiaoyu, Changping District, Beijing, 102209 (CN); DONG, Xueguang, Changping District, Beijing, 102209 (CN); XU, Zhiqiang, Changping District, Beijing, 102209 (CN)
(74) Representative: Zacco GmbH

(56) References cited:
- CN-A- 111 575 548
- US-A1- 2016 002 761
- US-A1- 2016 305 000
- US-A1- 2019 010 581
- ANONYMOUS: "ASTM E8/E8-M22 Standard Test Methods for Tension Testing of Metallic Materials", TEST METHODS FOR TENSION TESTING OF METALLIC MATERIALS, 1 July 2022 (2022-07-01), West Conshohocken, PA, pages 1 - 31, XP093111975, Retrieved from the Internet <URL:https://compass.astm.org/document/?contentCode=ASTM%7CE0008_E0008M-22%7Cen-US&proxycl=https%3A%2F%2Fsecure.astm.org&fromLogin=true> [retrieved on 20231213], DOI: 10.1520/E0008_E0008M-22

## Description

### Technical Field

The present disclosure relates to the technical field of aluminum alloy manufacturing, and in particular to a 6xxx-series aluminum alloy sheet for an inner panel of a hood, and a preparation method and use thereof.

### Background

Exhaust emission from a gasoline vehicle is one of the primary pollution sources of global air pollution. Lightweighting of an automobile is an important means to conserve energy, reduce emission and reduce pollution. Aluminum alloy sheet is considered as one of the most ideal materials for lightweight of the automobile due to its low density, high specific strength and excellent comprehensive performance. Currently, an outer panel mainly makes from a 6xxx-series alloy and an inner panel mainly makes from a 5xxx-series alloy. They connect together as an automobile cover by means of complex processes such as bonding and riveting. Accordingly, they are difficult to disassemble and sort for the subsequent recycle, thereby affecting recycle of automobile parts. With a 6xxx-series inner panel developed, the inner and the outer panels of the automobile make from the same 6xxx series, which is conducive to recycling and remanufacturing of the aluminum alloy sheet. Moreover, frontal collision of the automobile with a pedestrian, causing a head of the pedestrian to collide with a hood and resulting in injury, is a dominant traffic accident and the most serious case of injury. As a result, strength of the inner panel of the hood is required to be low, so as to reduce injury of collision to the head of the pedestrian.

In recent years, research on development of a 6xxx-series automobile sheet having a pedestrian protection effect for the inner panel of the hood is rarely found. In the existing technology of inner panel of the automobile hood, a sheet has a poor pedestrian protection effect when satisfying requirements of formability and mechanical strength; while a sheet, having an excellent pedestrian protection effect when having low mechanical strength, cannot satisfy a strength requirement of a support structure, and is difficult to use on a large scale.

The application US 2019/010581 A1 disclosed an aluminum alloy sheet excellent in terms of formability and bake hardenability, which is an Al-Mg-Si alloy sheet comprising, in terms of mass%, Mg: 0.2 to 2.0%, Si: 0.3 to 2.0% and Sn: 0.005 to 0.3%, with the remainder being Al and unavoidable impurities, and further defined the exothermic peak characteristic of the differential scanning calorimetry curve. However, the problem that a forming requirement and a pedestrian protection requirement of the described aluminium alloy may not be satisfied simultaneously has not yet been solved. The pedestrian protection performance of the described aluminium alloy still needs to be improved.

### Summary

A main objective of the present disclosure is to provide a 6xxx-series aluminum alloy sheet for an inner panel of a hood, and a preparation method and use thereof. The 6xxx-series aluminum alloy sheet of the present disclosure has low yield strength and high elongation in a finished product state after solute solution treatment and pre-aging, so as to overcome high difficulty in forming the inner panel of the hood. After baking, the 6xxx-series aluminum alloy sheet still maintains relatively low strength which just slightly exceeding a requirement strength of the support structure. It also has a low strain rate sensitivity coefficient to ensure the strength of the hood hardly changed to maintain a low strength during high-speed collision, meeting a specialized requirement of pedestrian safety. The problem that a forming requirement and a pedestrian protection requirement of an inner panel of a hood of an automobile in the prior art may not be satisfied simultaneously may be solved.

In order to achieve the above objective, according to one aspect of the present disclosure, a 6xxx-series aluminum alloy sheet for an inner panel of a hood is provided. The 6xxx-series aluminum alloy sheet includes the following compositions in percentage by weight: 0.75%-0.95% of Si, 0.15%-0.35% of Mg, 0.2%-0.4% of Fe, 0.05%-0.2% of Mn, 0.06%-0.2% of Cr, less than or equal to 0.15% of Cu, and less than or equal to 0.15% of inevitable impurities in total amount, where each inevitable impurity is less than or equal to 0.05%, the balance is Al, and an atomic ratio of Mg to Si is (0.18-0.54):1.

Further, the aluminum alloy sheet includes the following compositions in percentage by weight: 0.8%-0.85% of Si, 0.22%-0.32% of Mg, 0.25%-0.35% of Fe, 0.05%-0.1% of Mn, 0.06%-0.1% of Cr, less than or equal to 0.06% of Cu, and less than or equal to 0.15% of the inevitable impurities in total amount, where each inevitable impurity is less than or equal to 0.05%, the balance is Al, and the atomic ratio of Mg to Si is (0.30-0.47):1.

Further, a yield strength of the aluminum alloy sheet is less than or equal to 80 MPa, a elongation is greater than or equal to 25%; and after baking, the yield strength of the aluminum alloy sheet is 110-145 MPa, a 0.2% strain rate sensitivity coefficient is less than or equal to 0.005, and a 10% strain rate sensitivity coefficient is less than or equal to 0.003.

According to another aspect of the present disclosure, a preparation method of the 6xxx-series aluminum alloy sheet for an inner panel of a hood is provided. The preparation method includes the following steps: step S1, subjecting raw materials of the 6xxx-series aluminum alloy to mixing and casting in a composition ratio to obtain an aluminum alloy ingot; step S2, subjecting the aluminum alloy ingot to homogenization treatment to obtain a homogenized ingot; step S3, directly discharging the homogenized ingot out of a furnace for hot rolling to obtain a hot-rolled coil, and then subjecting the hot-rolled coil to carry out cold rolling on the hot-rolled coil to obtain a cold-rolled coil; and step S4, subjecting the cold-rolled coil to solute solution treatment to obtain a solute solution coil, then subjecting the solute solution coil to pre-aging treatment to obtain a finished temper coil, and finally slicing the finished temper coil to obtain the 6xxx-series aluminum alloy sheet.

Further, in the step S2, the homogenization treatment is conducted at a temperature of 470-540 °C for 4-20 h; and/or the homogenization treatment is conducted at the temperature of 500-520 °C for 8-14 h.

Further, in the step S3, the hot rolling is conducted at an initial rolling temperature of 470-540 °C, and a finish rolling temperature of 250-300 °C, and the thickness of hot-rolled coil is 3-8 mm.

Further, in the step S3, the thickness of cold-rolled coil is 0.8-1.5 mm.

Further, in the step S4, the solute solution treatment includes: heating the cold-rolled coil to 460-530 °C at a speed greater than 200 °C/min, carrying out heat retention for 5 s-1 min, and then cooling to room temperature at a speed greater than 10 °C/s.

Further, in the step S4, the pre-aging treatment includes: heating the solute solution coil to 70-100 °C in a pre-aging furnace at a speed greater than 80 °C/min, then discharging a heated coil out of the pre-aging furnace for coiling, where a temperature drop is less than 10 °C during a period from discharging to coiling. Then transferring a coiled coil to a heat retention furnace, carrying out heat retention at 60-90 °C for 2-10 h, and then cooling to room temperature.

According to another aspect of the present disclosure, a use of the 6xxx-series aluminum alloy sheet for an inner panel of a hood in an inner panel of a hood of an automobile is provided.

Compared with the prior art, the innovation and technological progress of the present disclosure are mainly embodied as follows:
The present disclosure has the innovation as follows:
(1) In the present disclosure, the conventional 5xxx-series alloy is replaced by the 6xxx-series alloy as the inner panel of the hood, thereby being conducive to recycling and remanufacturing of the aluminum alloy sheet of the automobile. The energy consumption of remanufacturing is only 5%-10% of that of direct manufactured by pure aluminum manufacturing, and the emitted carbon dioxide is only 5%. Therefore the energy consumption can be greatly reduced, and environmental pollution can be reduced as well.
(2) The 6xxx-series aluminum alloy sheet of the present disclosure has low yield strength and high elongation, such that high difficulty in forming the inner panel of the hood can be overcome. After baking, the 6xxx-series aluminum alloy sheet still maintains a relatively low strength, which just slightly exceeding the requirement strength of a support structure. Such low strength can effectively satisfy a specialized requirement for pedestrian safety.
(3) The present disclosure inventively provides significance of the strain rate sensitivity coefficient in improving pedestrian protection performance. A pedestrian collides with the hood at a high-speed state. Therefore, static performance of the aluminum alloy sheet is not sufficient to evaluate a pedestrian protection effect at the high-speed state. The aluminum alloy sheet must maintain low strength under a high-speed collision condition to satisfy a pedestrian protection requirement. The strain rate sensitivity coefficient can more conveniently and accurately evaluate pedestrian protection performance of the sheet.

The present disclosure has the technical progress as follows:
(1) Alloy compositions used by the present disclosure are different from compositions of a 6xxx-series aluminum alloy sheet for an automobile in the prior art. Initial yield strength before baking and yield strength after baking are appropriately reduced by reducing contents of Mg and Si. Grains are refined by adding Mn and Cr elements, and the elongation of the sheet is improved. Therefore, the aluminum alloy sheet has high formability to ensure the aluminum alloy sheet satisfies a stamping forming requirement of the inner panel of the hood before baking. And after baking, the aluminum alloy sheet can maintain low strength on the premise of satisfying the strength requirement of the support structure, and the low strain rate sensitivity coefficient to satisfy the requirement of pedestrian protection. Moreover, the content of Fe is improved to ensure the same level of recycle requirements.
(2) Further, the preparation method of the present disclosure is aimed at a large-scale, large-size and large-weight ingot required for industrial production, and the selected high-temperature homogenization process can ensure that the temperature of each part of the ingot is homogenous. Moreover, the temperature is higher than the solute solution treatment temperature, such that unstable material performance caused by Mg₂Si precipitation between batches is avoided. Selected hot rolling, cold rolling, solute solution treatment and pre-aging treatment processes all consider equipment capacity under industrial production conditions, and are suitable for large-scale preparation.
(3) Further, the 6xxx-series aluminum alloy sheet prepared by the present disclosure has the low contents of Mg and Si. Therefore, the solute solution treatment temperature used by the present disclosure is lower than that of 6xxx-series alloys such as 6014 and 6016 that are widely used at present. The low solute solution treatment temperature can avoid reduction in formability caused by growth of a grain size, and further saves energy to satisfy requirements of energy conservation and emission reduction.

### Detailed Description of the Embodiments

It should be noted that the examples in this application and features in the examples may be combined with each other without conflict. The present disclosure is described in detail below by combining with the examples.

It should be noted that the 6xxx-series aluminum alloy sheet of the present disclosure can be used not only for the inner panel of the hood of fuel vehicles, but also for the inner panel of the hood of new energy vehicles.

### Explanation of terms:

Percentage by weight: a percentage of mass (weight) of one composition in total mass.

Atomic ratio: a ratio of the number of metal atoms in an alloy.

Yield strength: a yield limit of an aluminum alloy during a yield phenomenon. A stress value producing 0.2% residual deformation is specified as the yield limit. A stress-strain curve is obtained by means of a unidirectional tensile test, and yield strength data is obtained from curve.

Initial yield strength: a finished temper sheet is obtained after casting, homogenization, hot rolling, cold rolling, solute solution treatment and pre-aging treatment. Then, the finished sheet stores for 7 days at room temperature. Mechanical performance of the finished sheet is tested by means of a unidirectional tensile test to obtain the initial yield strength.

Yield strength after baking: after the finished sheet stored for 7 days at the room temperature, the finished sheet is subjected to 2% pre-stretching treatment by means of a unidirectional stretching machine, and then heat retention is carried out in an oil bath furnace at 185 °C for 20min to simulate a baking process in an actual production process of a main engine factory. The yield strength in a baked state is tested by means of the unidirectional tensile test.

Strain rate sensitivity coefficient: tensile and high-speed tensile tests are carried out on a baked sheet, mechanical performance of strain rates of 10⁻³, 10⁻², 10⁻¹, 10⁰, 10¹, 10² and 10³/s are evaluated separately through a constant strain rate method. The logarithm of strength corresponding to a 0.2% strain, the logarithm of strength corresponding to a 10% strain, and the logarithm of a strain rate are made separately, i.e., Inσ-Inξ₁, linear regression is carried out on a double logarithmic curve. The slope of the double logarithmic curve is the strain rate sensitivity coefficient.

Pedestrian protection performance refers to the injury to a pedestrian on the aluminum alloy sheet of the automobile engine during high-speed collision. Lowering the strength of the sheet may reduce injury to a pedestrian. In the present disclosure, excellent pedestrian protection performance of the aluminum alloy means that on the premise of satisfying a strength requirement of a support structure, the aluminum alloy has low yield strength after baking and a low strain rate sensitivity coefficient, obtaining an excellent pedestrian protection effect. The inventor of the present disclosure finds in the research process that the strain rate sensitivity coefficient may quickly and accurately evaluate the pedestrian protection performance, and the greater the strain rate sensitivity coefficient is, the more remarkable strength improvement of the material is when the strain rate increases. Collision between the automobile and the pedestrian occurs at a high-speed state, and a material having a small strain rate sensitivity coefficient has small strength improvement and small injury to the pedestrian. Some steel may have the same strength as the aluminum alloy under static conditions, but the aluminum alloy has the strain rate sensitivity coefficient much less than that of steel. Under high-speed collision, the strength of the aluminum alloy is hardly changed, and the strength of the steel is remarkably improved, which is also a reason why the aluminum alloy has better pedestrian protection performance.

As described in the background of the present disclosure, there is a problem in the prior art that an inner panel of a hood of an automobile may not satisfy the forming requirement and the pedestrian protection requirement. In order to solve the above problem, in a typical embodiment of the present disclosure, a 6xxx-series aluminum alloy sheet for an inner panel of a hood is provided. The 6xxx-series aluminum alloy sheet includes the following compositions in percentage by weight: 0.75%-0.95% of Si, 0.15%-0.35% of Mg, 0.2%-0.4% of Fe, 0.05%-0.2% of Mn, 0.06%-0.2% of Cr, less than or equal to 0.15% of Cu, and less than or equal to 0.15% of inevitable impurities in total amount, where each inevitable impurity is less than or equal to 0.05%, the balance is Al, and an atomic ratio of Mg to Si is (0.18-0.54):1.

Si and Mg are used as main strengthening elements of a 6xxx-series aluminum alloy. When a content of Si is lower than 0.75%, and a content of Mg is lower than 0.15%, strength of the alloy is too low to satisfy a strength requirement of a support structure of an automobile sheet. However, when the content of Si exceeds 0.95%, and the content of Mg exceeds 0.35%, initial strength is too high, resulting in reduction in formability and cannot satisfy the requirement of pedestrian protection requirement after baking. Therefore, in the present disclosure, the content of Si is controlled at 0.75%-0.95%, and the content of Mg is controlled at 0.15%-0.35%. Cu has effects of solute solution strengthening and aging strengthening. The alloy may not be softened after baking treatment by adding a small amount of Cu element into the 6xxx-series alloy. However, a too high content of Cu element seriously reduces hot working performance of the alloy. Therefore, in the present disclosure, Cu is controlled to be less than or equal to 0.15%. Mn and Cr mainly have effects of inhibiting recrystallization and refining grains in the alloy, which may improve both material strength and corrosion resistance. However, a too high content of Mn and Cr is not conducive to satisfaction of the pedestrian protection requirement after the alloy is baked. Therefore, a content of Mn is controlled at 0.05% -0.2%, and a content of Cr is controlled at 0.06%-0.2%. Fe is an impurity element that may have adverse effects on the elongation of the aluminum alloy sheet of the present disclosure. Moreover, given that the conventional 5xxx-series alloy is replaced by the 6xxx-series alloy as the inner panel of the hood, the inner and outer panel are both 6xxx-series aluminum alloy at this time, in order to satisfy the same level of recycle requirements of Fe as a conventional outer sheet of the hood, a content of Fe is controlled at 0.2%-0.4%.

A specific combination of elements is used in the 6xxx-series aluminum alloy sheet of the present disclosure. Initial yield strength before baking and yield strength after baking are appropriately reduced by reducing the contents of Mg and Si. Grains are refined by adding Mn and Cr elements, such that the aluminum alloy sheet has high formability. The sheet has low yield strength and high elongation in a finished product state after solute solution treatment and pre-aging treatment, so as to overcome high difficulty in forming the inner panel of the hood. After baking, the aluminum alloy sheet only maintains strength slightly exceeding strength of the support structure, and still maintains low strength and the low strain rate sensitivity coefficient, such that it is ensured that during high-speed collision, strength of the hood is hardly changed, and the low strength is maintained, which is conducive to reduction in injury to the pedestrian and satisfaction of the pedestrian protection requirement. The sheet is further conducive to recycling and remanufacturing of the aluminum alloy sheet of the automobile, such that energy consumption may be greatly reduced, and environmental pollution may be reduced.

In addition, the present disclosure further provides significance of the strain rate sensitivity coefficient in improving pedestrian protection performance. In common traffic accidents, the pedestrian collides with the hood at the high-speed state. Therefore, static performance of the aluminum alloy sheet is not sufficient to evaluate a pedestrian protection effect at the high-speed state. The aluminum alloy sheet must maintain low strength under a high-speed collision condition to satisfy the pedestrian protection requirement. The strain rate sensitivity coefficient may more conveniently and accurately evaluate the pedestrian protection performance of the sheet.

In order to further improve formability, in a preferred embodiment, the aluminum alloy sheet includes the following compositions in percentage by weight: 0.8%-0.85% of Si, 0.22%-0.32% of Mg, 0.25%-0.35% of Fe, 0.05%-0.1% of Mn, 0.06%-0.1% of Cr, less than or equal to 0.06% of Cu, and less than or equal to 0.15% of the inevitable impurities in total amount, where each inevitable impurity is less than or equal to 0.05%, the balance is Al, and the atomic ratio of Mg to Si is (0.30-0.47):1. The aluminum alloy consisting of the above weights may further reduce the initial yield strength, improve elongation, and facilitate a forming process. Moreover, after baking, the aluminum alloy has appropriate yield strength to ensure structural support, and simultaneously improve pedestrian protection performance. The atomic ratio of Mg to Si includes, but not limited to, the above range. When the atomic ratio is limited in the above range, the aluminum alloy may have appropriate strength, thereby better satisfying the forming requirement and the pedestrian protection requirement.

As described above, the aluminum alloy of the present disclosure has the low initial yield strength and the high elongation, such that the aluminum alloy sheet has high formability. After baking, the aluminum alloy sheet may maintain low strength on the premise of satisfying the strength requirement of the support structure, thereby satisfying the pedestrian protection requirement. In a preferred embodiment, a yield strength of the aluminum alloy sheet is less than or equal to 80 MPa, a elongation is greater than or equal to 25%; and after baking, the yield strength of the aluminum alloy sheet is 110-145 MPa, a 0.2% strain rate sensitivity coefficient is less than or equal to 0.005, and a 10% strain rate sensitivity coefficient is less than or equal to 0.003.

In another typical embodiment of the present disclosure, a preparation method of the 6xxx-series aluminum alloy sheet for an inner panel of a hood of the present disclosure is further provided. The preparation method includes the following steps: step S1, subjecting raw materials of the 6xxx-series aluminum alloy to mixing and casting in a composition ratio to obtain an aluminum alloy ingot; step S2, subjecting the aluminum alloy ingot to homogenization treatment to obtain a homogenized ingot; step S3, directly discharging the homogenized ingot out of a furnace for hot rolling to obtain a hot-rolled coil, and then subjecting the hot-rolled coil to carry out cold rolling on the hot-rolled coil to obtain a cold-rolled coil; and step S4, subjecting the cold-rolled coil to solute solution treatment to obtain a solute solution coil, then subjecting the solute solution coil to pre-aging treatment to obtain a finished temper coil, and finally slicing the finished temper coil to obtain the 6xxx-series aluminum alloy sheet.

The raw materials are mixed and melted in the composition ratio of the 6xxx-series aluminum alloy sheet, refined and cast to form the aluminum alloy ingot by utilizing semi-continuous casting equipment. Then, high-temperature homogenization treatment is carried out on the aluminum alloy ingot to make a temperature of each part of the ingot homogeneous, so as to obtain a homogenized ingot. Then, the homogenized ingot is directly hot-rolled without cooling, and a high initial hot rolling temperature may avoid the problem of unstable material performance caused by Mg₂Si precipitation in each batch. The hot-rolled coil is obtained, and is sequentially subjected to cold rolling, solute solution treatment and pre-aging treatment to obtain the 6xxx-series aluminum alloy sheet.

The preparation method of the present disclosure is aimed at a large-scale, large-size and large-weight ingot required for industrial production, and a selected high-temperature homogenization process may ensure that the temperature of each part of the ingot is homogenous. If homogenization annealing described above is not carried out, it is difficult to ensure homogeneity of the temperature of the entire ingot under large industrial production conditions. Moreover, the homogenization treatment has the temperature higher than a solute solution treatment temperature, such that unstable material performance caused by Mg₂Si precipitation between batches may be avoided. Moreover, since the contents of Mg and Si of the 6xxx-series aluminum alloy sheet of the present disclosure are low, the low solute solution treatment temperature may be used to avoid reduction in formability caused by growth of a grain size. In addition, selected hot rolling, cold rolling, solute solution treatment and pre-aging treatment processes all consider equipment capacity under industrial production conditions, and are suitable for large-scale preparation. In a word, the compositions and process used in the 6xxx-series aluminum alloy sheet of the present disclosure may prepare the aluminum alloy sheet that satisfies the forming requirement of the inner panel of the hood and the pedestrian protection requirement after baking. Moreover, the preparation method is simple, may ensure homogeneous and stable performance in each part of single batch materials and between batches, and is suitable for industrial production.

In order to further improve a homogenization treatment effect and avoid the problem of Mg₂Si precipitation, in a preferred embodiment, in the step S2, the homogenization treatment is conducted at a temperature of 470-540 °C for 4-20 h; and/or the homogenization treatment is conducted at the temperature of 500-520 °C for 8-14 h. Performance of each batch of materials is stable under temperature and time conditions described above.

The conventional initial rolling temperature of rough hot rolling ranges from 370 °C to 430 °C. At that temperature, Mg₂Si may be precipitated, and it is difficult to ensure stability of different batches of materials during industrial production. In a preferred embodiment, in the step S3, the hot rolling is conducted at an initial rolling temperature of 470-540 °C, and is consistent with a temperature of homogenization treatment. At the beginning of hot rolling, since the homogenized ingot is directly hot-rolled without cooling, and the temperature is high, the problem of unstable performance of each batch of materials caused by Mg₂Si precipitation may be avoided. Hot rolling has a finish rolling temperature of 250-300 °C, and the thickness of hot-rolled coil is 3-8 mm. Preferably, in the step S3, the thickness of cold-rolled coil is 0.8-1.5 mm. Therefore, the aluminum alloy sheet is more homogeneous and the formability can be further improved.

Since the contents of Mg and Si of the 6xxx-series aluminum alloy sheet of the present disclosure are low, the low solute solution treatment temperature may be used. Specifically, in a preferred embodiment, in the step S4, the solute solution treatment includes: heat the cold-rolled coil to 460-530 °C at a speed greater than 200 °C/min, such as 200-600 °C/min, carrying out heat retention for 5 s-1 min, and then cool to room temperature at a speed greater than 10 °C/s, such as 10-50 °C/s. The room temperature is about 20-30 °C. The above solute solution treatment temperature is lower than that of 6xxx-series alloys such as 6014 and 6016 which are widely used at present, may better avoid reduction in formability caused by growth of a grain size, and further may save energy and reduce environmental pollution. Solute solution treatment may be carried out in an air cushion type continuous annealing furnace, and a cooling method may be water cooling, water mist cooling or air cooling.

Specifically, in a preferred embodiment, in the step S4, the pre-aging treatment includes: heating the solute solution coil to 70-100 °C in a pre-aging furnace at a speed greater than 80 °C/min, such as 80-300 °C/min, then discharging a heated coil out of the pre-aging furnace for coiling, where a temperature drop is less than 10 °C during a period from discharging to coiling, then transferring a coiled coil to a heat retention furnace, carrying out heat retention at 60-90 °C for 2-10 h, and then cooling to room temperature. The pre-aging treatment method described above may improve storage stability of the aluminum alloy sheet at the room temperature, such that the aluminum alloy sheet has low yield strength to better overcome high difficulty in forming the inner panel of the hood.

In another typical embodiment of the present disclosure, a use of the 6xxx-series aluminum alloy sheet for an inner panel of a hood of the present disclosure in an inner panel of a hood of an automobile is further provided. The conventional 5xxx-series alloy sheet is replaced with the 6xxx-series aluminum alloy sheet of the present disclosure as the inner panel of the hood, thereby satisfying the forming requirement and the pedestrian protection requirement, and being further conducive to recycling and remanufacturing of the aluminum alloy sheet of the automobile. The impurity element Fe is inevitably introduced in the recycle process. Therefore, in order to ensure the equivalent recycle requirements of outer panel, the content of Fe of the aluminum alloy is appropriately increased to 0.2%-0.4%. The same level of recycle requirements of Fe as a conventional outer sheet of the hood may be ensured by appropriately increasing the content of Fe of the aluminum alloy. The energy consumption of recycling and remanufacturing is only 5%-10% of that of pure aluminum raw material manufacturing, and that of emitted carbon dioxide is only 5%, such that energy consumption may be greatly reduced, and environmental pollution may be reduced.

This application is further described in detail below in combination with specific examples, and the examples shall not be construed as limitations of the protection scope as required by this application.

### Example 1

Aluminum alloy raw materials were mixed and melted, and were refined and cast to form an ingot by semi-continuous casting. The ingot was then sawn, milled, and placed into a heat treatment furnace for homogenization heat treatment, and the ingot after homogenization heat treatment was directly discharged out of the furnace for hot rolling. After hot rolling, the obtained hot-rolled coil was cold-rolled to obtain a cold-rolled coil. After that, the cold-rolled coil was sent into an air cushion type continuous annealing furnace for solute solution treatment, and then was cooled to room temperature at a speed greater than 10 °C/s to obtain a solute solution coil. The solute solution coil was sent into a pre-aging furnace for pre-aging treatment, and then was discharged out of the pre-aging furnace for coiling, where a temperature drop rate was less than 10 °C during a period from discharging to coiling. The coil was transferred to a heat retention furnace for heat retention, then was cooled to the room temperature. The coil was then sliced to obtain the 6xxx-series aluminum alloy sheets. The finished sheets were stored for 7 days at the room temperature. The mechanical performance, baking performance, and a strain rate sensitivity coefficient were evaluated. Aluminum alloy compositions are shown in Table 1. Process parameters are shown in Table 2. Performance evaluation results are shown in Table 3.

### Examples 2-7

The difference between Examples 2-7 and Example 1 is that aluminum alloy compositions and process parameters are different. The aluminum alloy compositions are shown in Table 1. Process parameters are shown in Table 2. Performance evaluation results are shown in Table 3.

### Comparative Examples 1-7

The difference between Comparative Examples 1-7 and Example 1 is that aluminum alloy compositions and process parameters are different. The aluminum alloy compositions are shown in Table 1. Process parameters are shown in Table 2. Performance evaluation results are shown in Table 3.

**Table 1**

| Percentage by weight (wt.%) | Si | Mg | Fe | Mn | Cu | Cr | Al and inevitable impurities |
|---|---|---|---|---|---|---|---|
| Example 1 | 0.75 | 0.35 | 0.22 | 0.05 | 0.05 | 0.06 | Balance |
| Example 2 | 0.75 | 0.35 | 0.22 | 0.05 | 0.05 | 0.06 | Balance |
| Example 3 | 0.82 | 0.31 | 0.28 | 0.08 | 0.05 | 0.08 | Balance |
| Example 4 | 0.82 | 0.31 | 0.28 | 0.08 | 0.05 | 0.08 | Balance |
| Example 5 | 0.95 | 0.15 | 0.4 | 0.2 | 0.06 | 0.2 | Balance |
| Example 6 | 0.8 | 0.32 | 0.25 | 0.05 | 0.06 | 0.06 | Balance |
| Example 7 | 0.85 | 0.22 | 0.35 | 0.1 | 0.06 | 0.1 | Balance |
| Comparative Example 1 | 1.03 | 0.42 | 0.23 | 0.18 | 0.08 | 0.11 | Balance |
| Comparative Example 2 | 0.84 | 0.28 | 0.21 | 0.04 | 0.04 | 0.02 | Balance |
| Comparative Example 3 | 0.61 | 0.69 | 0.22 | 0.08 | 0.05 | 0.06 | Balance |
| Comparative Example 4 | 0.75 | 0.35 | 0.22 | 0.05 | 0.05 | 0.06 | Balance |
| Comparative Example 5 | 0.75 | 0.35 | 0.22 | 0.05 | 0.05 | 0.06 | Balance |
| Comparative Example 6 | 0.82 | 0.31 | 0.28 | 0.08 | 0.05 | 0.08 | Balance |
| Comparative Example 7 | 0.95 | 0.15 | 0.4 | 0.2 | 0.06 | 0.2 | Balance |

**Table 2**

| | Homogenization | | Hot rolling | | Cold rolling | Solute solution | | Pre-aging | | |
|---|---|---|---|---|---|---|---|---|---|---|
| | Homogenization temperature | Homogeniz ation time | Thickn ess | Hot rolling temperature | Thickn ess | Heat retention temperature | Heat retention time | Heating rate | Heat retention temperature | Heat retention time |
| | °C | h | mm | °C | mm | °C | s | °C/min | °C | h |
| Example 1 | 470 | 20 | 4 | 264 | 0.8 | 500 | 30 | 75 | 68 | 6 |
| Example 2 | 510 | 10 | 6 | 300 | 1 | 530 | 5 | 85 | 76 | 6 |
| Example 3 | 500 | 8 | 5 | 282 | 0.9 | 460 | 15 | 90 | 83 | 8 |
| Example 4 | 490 | 6 | 8 | 250 | 1.5 | 530 | 10 | 100 | 90 | 2 |
| Example 5 | 540 | 4 | 4 | 275 | 0.6 | 460 | 60 | 70 | 60 | 10 |
| Example 6 | 500 | 8 | 5 | 282 | 0.9 | 460 | 15 | 90 | 83 | 8 |
| Example 7 | 500 | 8 | 5 | 282 | 0.9 | 460 | 15 | 90 | 83 | 8 |
| Comparative Example 1 | 540 | 10 | 6 | 268 | 1.1 | 530 | 15 | 80 | 75 | 2 |
| Comparative Example 2 | 500 | 8 | 6 | 270 | 1 | 490 | 10 | 75 | 64 | 8 |
| Comparative Example 3 | 550 | 10 | 6 | 280 | 1 | 530 | 15 | 85 | 80 | 4 |
| Comparative Example 4 | 510 | 6 | 6 | 340 | 1 | 460 | 15 | 80 | 75 | 4 |
| Comparative Example 5 | 500 | 7 | 6 | 275 | 1 | 400 | 30 | 75 | 70 | 4 |
| Comparative Example 6 | 520 | 6 | 4 | 280 | 0.8 | 480 | 120 | 90 | 82 | 10 |
| Comparative Example 7 | 510 | 8 | 5 | 259 | 1 | 490 | 15 | 105 | 95 | 6 |

**Table 3**

| | T4P state | | Baked state | | |
|---|---|---|---|---|---|
| | Yield strength | Elongation | Yield strength | Strain rate sensitivity coefficient | |
| | MPa | % | MPa | Strain (0.2%) | Strain (10%) |
| Example 1 | 61 | 30 | 111 | 0.0031 | 0.0014 |
| Example 2 | 72 | 28 | 121 | 0.0038 | 0.0023 |
| Example 3 | 67 | 28 | 118 | 0.0034 | 0.0018 |
| Example 4 | 74 | 27 | 125 | 0.0035 | 0.0022 |
| Example 5 | 77 | 26 | 128 | 0.0043 | 0.0026 |
| Example 6 | 68 | 28 | 120 | 0.0035 | 0.0019 |
| Example 7 | 65 | 29 | 116 | 0.0032 | 0.0017 |
| Comparative Example 1 | 113 | 29 | 208 | 0.0039 | 0.0015 |
| Comparative Example 2 | 52 | 23 | 93 | 0.0028 | 0.0004 |
| Comparative Example 3 | 115 | 27 | 212 | 0.0064 | 0.0047 |
| Comparative Example 4 | 53 | 26 | 88 | 0.0041 | 0.0021 |
| Comparative Example 5 | 60 | 27 | 91 | 0.0035 | 0.0018 |
| Comparative Example 6 | 91 | 28 | 151 | 0.0041 | 0.0017 |
| Comparative Example 7 | 94 | 26 | 144 | 0.0038 | 0.0020 |

From the above, it may be seen that there are significant differences of alloy composition between Comparative Examples 1-3 and the present disclosure, and there are significant differences of preparation processes between an aluminum alloy sheet of Comparative Examples 4-7 and the present disclosure. In Comparative Example 1, yield strength before and after baking is too large, which is not conducive to pedestrian protection. In Comparative Example 2, the strain rate sensitivity coefficient is low, but elongation is too low, the formability is poor, and yield strength before and after baking is also too low to satisfy mechanical strength requirements of the support structure. In Comparative Example 3, yield strength before and after baking is too large, and the strain rate sensitivity coefficient is also too high, which is not conducive to pedestrian protection. In Comparative Example 4, yield strength before and after baking is too low to satisfy mechanical strength requirements of the support structure. In Comparative Examples 6 and 7, yield strength before and after baking is too large, which is not conducive to pedestrian protection.

Compared with Comparative Examples, the specific combination of elements is used in the examples of the present disclosure to satisfy the forming requirement and the pedestrian protection requirement. Initial yield strength before baking and yield strength after baking are appropriately reduced by reducing contents of Mg and Si. The grain size is refined by adding Mn and Cr elements, and elongation of the sheet is improved. Therefore, the aluminum alloy sheet has high formability, which is ensured that before baking, the aluminum alloy sheet satisfies the stamping forming requirement of the inner panel of the hood, and after baking, the aluminum alloy sheet may maintain low strength and the low strain rate sensitivity coefficient on the premise of satisfying the strength requirement of the support structure, thereby satisfying the pedestrian protection requirement. Moreover, given that the conventional 5xxx-series alloy is replaced by the 6xxx-series alloy as the inner panel of the hood, the inner and outer panel are both 6xxx-series aluminum alloy at this time, thereby the sheet is further conducive to recycling and remanufacturing of the aluminum alloy sheet of the automobile, such that energy consumption may be greatly reduced, and environmental pollution may be reduced.

## Claims

1. A 6xxx-series aluminum alloy sheet for an inner panel of a hood, wherein comprises the following compositions in percentage by weight: 0.75%-0.95% of Si, 0.15%-0.35% of Mg, 0.2%-0.4% of Fe, 0.05%-0.2% of Mn, 0.06%-0.2% of Cr, less than or equal to 0.15% of Cu, and less than or equal to 0.15% of inevitable impurities in total amount, wherein each inevitable impurity is less than or equal to 0.05%, the balance is Al, and an atomic ratio of Mg to Si is (0.18-0.54):1; and
a yield strength of the aluminum alloy sheet is less than or equal to 80 MPa, a elongation is greater than or equal to 25%; and after baking, the yield strength of the aluminum alloy sheet is 110-145 MPa, a 0.2% strain rate sensitivity coefficient is less than or equal to 0.005, and a 10% strain rate sensitivity coefficient is less than or equal to 0.003;
the baking is carried out under following conditions: after the aluminum alloy sheet stored for 7 days at room temperature, the aluminum alloy sheet is subjected to 2% pre-stretching treatment by means of a unidirectional stretching machine, and then heat retention is carried out in an oil bath furnace at 185 °C for 20 min;
the strain rate sensitivity coefficient is measured by the following method: tensile test and high-speed tensile test are carried out on a baked sheet, mechanical performance of strain rates of 10-3, 10-2, 10-1, 100, 101, 102 and 103/s are evaluated separately through a constant strain rate method; the logarithm of strength corresponding to a 0.2% strain, the logarithm of strength corresponding to a 10% strain, and the logarithm of a strain rate are made separately, i.e., lnσ-lnξ1, linear regression is carried out on a double logarithmic curve; the slope of the double logarithmic curve is the strain rate sensitivity coefficient.

2. The aluminum alloy sheet according to claim 1, wherein comprises the following compositions in percentage by weight: 0.8%-0.85% of Si, 0.22%-0.32% of Mg, 0.25%-0.35% of Fe, 0.05%-0.1% of Mn, 0.06%-0.1% of Cr, less than or equal to 0.06% of Cu, and less than or equal to 0.15% of the inevitable impurities in total amount, wherein each inevitable impurity is less than or equal to 0.05%, the balance is Al, and the atomic ratio of Mg to Si is (0.30-0.47):1.

3. A preparation method of the 6xxx-series aluminum alloy sheet for an inner panel of a hood according to claim 1 or 2, wherein comprises the following steps:
step S1, subjecting raw materials of the 6xxx-series aluminum alloy to mixing and casting in a composition ratio to obtain an aluminum alloy ingot;
step S2, subjecting the aluminum alloy ingot to homogenization treatment to obtain a homogenized ingot;
step S3, directly discharging the homogenized ingot out of a furnace for hot rolling to obtain a hot-rolled coil, and then subjecting the hot-rolled coil to carry out cold rolling on the hot-rolled coil to obtain a cold-rolled coil; and
step S4, subjecting the cold-rolled coil to solute solution treatment to obtain a solute solution coil, then subjecting the solute solution coil to pre-aging treatment to obtain a finished temper coil, and finally slicing the finished temper coil to obtain the 6xxx-series aluminum alloy sheet;
in the step S2, the homogenization treatment is conducted at a temperature of 470-540 °C for 4-20 h;
in the step S3, the hot rolling is conducted at an initial rolling temperature of 470-540 °C, and a finish rolling temperature of 250-300 °C, and the thickness of hot-rolled coil is 3-8 mm;
in the step S3, the thickness of cold-rolled coil is 0.8-1.5 mm;
in the step S4, the solute solution treatment comprises: heating the cold-rolled coil to 460-530 °C at a speed greater than 200 °C/min, carrying out heat retention for 5 s-1 min, and then cooling to room temperature at a speed greater than 10 °C/s;
in the step S4, the pre-aging treatment comprises: heating the solute solution coil to 70-100 °C in a pre-aging furnace at a speed greater than 80 °C/min, then discharging a heated coil out of the pre-aging furnace for coiling, wherein a temperature drop is less than 10 °C during a period from discharging to coiling, then transferring a coiled coil to a heat retention furnace, carrying out heat retention at 60-90 °C for 2-10 h, and then cooling to room temperature.

4. The preparation method according to claim 3, wherein in the step S2, the homogenization treatment is conducted at the temperature of 500-520 °C for 8-14 h.

5. A use of the 6xxx-series aluminum alloy sheet for an inner panel of a hood according to claim 1 or 2 in an inner panel of a hood of an automobile.

## Patentansprüche

1. Aluminiumlegierungsblech der Serie 6xxx für eine Innenplatte einer Haube, wobei es die folgenden Zusammensetzungen in Gewichtsprozent umfasst: 0,75-0,95 % Si, 0,15-0,35 % Mg, 0,2-0,4 % Fe, 0,05-0,2 % Mn, 0,06-0,2 % Cr, weniger als oder gleich 0,15 % Cu und weniger als oder gleich 0,15 % unvermeidbare Verunreinigungen in der Gesamtmenge, wobei jede unvermeidbare Verunreinigung weniger als oder gleich 0,05 % beträgt, der Rest Al ist und ein Atomverhältnis von Mg zu Si (0,18-0,54):1 beträgt; und
wobei eine Streckgrenze des Aluminiumlegierungsblechs weniger als oder gleich 80 MPa beträgt, eine Elongation größer als oder gleich 25 % beträgt; und die Streckgrenze des Aluminiumlegierungsblechs nach Brennen 110-145 MPa beträgt, ein Dehnungsgeschwindigkeits-Empfindlichkeitskoeffizient von 0,2 % weniger als oder gleich 0,005 ist und ein Dehnungsgeschwindigkeits-Empfindlichkeitskoeffizient von 10 % weniger als oder gleich 0,003 ist;
wobei das Brennen unter den folgenden Bedingungen ausgeführt wird: nachdem das Aluminiumlegierungsblech 7 Tage lang bei Raumtemperatur gelagert wurde, wird das Aluminiumlegierungsblech einer 2 % Vordehnungsbehandlung mittels einer unidirektionalen Dehnungsmaschine unterzogen und dann wird eine Wärmehaltung in einem Ölbadofen bei 185 °C für 20 Minuten ausgeführt;
wobei der Dehnungsgeschwindigkeits-Empfindlichkeitskoeffizient durch das folgende Verfahren gemessen wird: Zugprüfung und Hochgeschwindigkeits-Zugprüfung werden an einem gebrannten Blech ausgeführt, mechanische Leistung bei Dehnungsgeschwindigkeiten von 10-3, 10-2, 10-1, 100, 101, 102 und 103/s werden getrennt über ein konstantes Dehnungsgeschwindigkeitsverfahren bewertet; der Stärkelogarithmus, der einer Dehnung von 0,2 % entspricht, der Stärkelogarithmus, der einer Dehnung von 10 % entspricht, und der Dehnungsgeschwindigkeitslogarithmus werden getrennt ermittelt, d. h. lnσ-lnξ1, eine lineare Regression wird an einer doppelten logarithmischen Kurve ausgeführt; die Steigung der doppelten logarithmischen Kurve ist der Dehnungsgeschwindigkeits-Empfindlichkeitskoeffizient.

2. Aluminiumlegierungsblech nach Anspruch 1, wobei es die folgenden Zusammensetzungen in Gewichtsprozent umfasst: 0,8-0,85 % Si, 0,22-0,32 % Mg, 0,25-0,35 % Fe, 0,05-0,1 % Mn, 0,06-0,1 % Cr, weniger als oder gleich 0,06 % Cu und weniger als oder gleich 0,15 % der unvermeidbaren Verunreinigungen in der Gesamtmenge, wobei jede unvermeidbaren Verunreinigung weniger als oder gleich 0,05 % beträgt, der Rest Al ist und das Atomverhältnis von Mg zu Si (0,30-0,47):1 beträgt.

3. Herstellungsverfahren für das Aluminiumlegierungsblech der Serie 6xxx für eine Innenplatte einer Haube nach Anspruch 1 oder 2, wobei es die folgenden Schritte umfasst:
Schritt S1, Rohmaterialien der Aluminiumlegierung der Serie 6xxx Mischen und Gießen in einem Zusammensetzungsverhältnis aussetzen, um einen Aluminiumlegierungsbarren zu erlangen;
Schritt S2, den Aluminiumlegierungsbarren einer Homogenisierungsbehandlung aussetzen, um einen homogenisierten Barren zu erlangen;
Schritt S3, den homogenisierten Barren aus einem Ofen zum Warmwalzen direkt entladen, um eine warmgewalzte Spule zu erlangen, und dann die warmgewalzte Spule aussetzen, um Kaltwalzen an der warmgewalzten Spule auszuführen, um eine kaltgewalzte Spule zu erlangen; und
Schritt S4, die kaltgewalzte Spule einer Lösungsbehandlung mit einem gelösten Stoff aussetzen, um eine Spule nach Lösungsbehandlung mit einem gelösten Stoff zu erlangen, dann die Spule nach Lösungsbehandlung mit einem gelösten Stoff einer Voralterungsbehandlung aussetzen, um eine fertige nachgewalzten Spule zu erlangen, und abschließend die fertige nachgewalzten Spule schneiden, um das Aluminiumlegierungsblech der Serie 6xxx zu erlangen;
wobei in dem Schritt S2 die Homogenisierungsbehandlung für 4-20 Stunden bei einer Temperatur von 470-540 °C durchgeführt wird;
wobei in dem Schritt S3 das Warmwalzen bei einer anfänglichen Walztemperatur von 470-540 °C und einer Endwalztemperatur von 250-300 °C durchgeführt wird und die Dicke der warmgewalzten Spule 3-8 mm beträgt;
wobei in dem Schritt S3 die Dicke der kaltgewalzten Spule 0,8-1,5 mm beträgt;
wobei in dem Schritt S4 die Lösungsbehandlung mit einem gelösten Stoff Folgendes umfasst: Erhitzen der kaltgewalzten Spule auf 460-530 °C bei einer Geschwindigkeit von mehr als 200 °C/min, Ausführen einer Wärmehaltung für 5 s-1 min und dann Abkühlen auf Raumtemperatur mit einer Geschwindigkeit von mehr als 10 °C/s; wobei in dem Schritt S4 die Voralterungsbehandlung Folgendes umfasst: Erhitzen der Spule nach der Lösungsbehandlung mit einem gelösten Stoff auf 70-100 °C in einem Voralterungsofen mit einer Geschwindigkeit von mehr als 80 °C/min, dann Entladen einer erhitzten Spule aus dem Voralterungsofen zum Aufwickeln, wobei ein Temperaturabfall während eines Zeitraums von dem Entladen bis zu dem Aufwickeln weniger als 10 °C beträgt, dann Übertragen einer aufgewickelten Spule in einen Wärmehalteofen, Ausführen einer Wärmehaltung bei 60-90 °C für 2-10 Stunden und dann Abkühlen auf Raumtemperatur.

4. Herstellungsverfahren nach Anspruch 3, wobei in dem Schritt S2 die Homogenisierungsbehandlung bei der Temperatur 500-520 °C für 8-14 Stunden durchgeführt wird.

5. Verwendung des Aluminiumlegierungsblechs der Serie 6xxx für eine Innenplatte einer Haube nach Anspruch 1 oder 2 in einer Innenplatte einer Haube eines Automobils.

## Revendications

1. Tôle d'alliage d'aluminium de série 6xxx pour panneau intérieur de capot, comprenant les compositions suivantes en pourcentage massique : 0,75 % à 0,95 % de Si, 0,15 % à 0,35 % de Mg, 0,2 % à 0,4 % de Fe, 0,05 % à 0,2 % de Mn, 0,06 % à 0,2 % de Cr, 0,15 % ou moins de Cu, et 0,15 % ou moins d'impuretés inévitables, chaque impureté inévitable étant inférieure ou égale à 0,05 %, le reste étant de l'aluminium, et le rapport atomique Mg à Si étant de (0,18 à 0,54) : 1 ; et une limite d'élasticité de la tôle d'alliage d'aluminium est inférieure ou égale à 80 MPa, un allongement est supérieur ou égal à 25 % ; et après la cuisson, la limite d'élasticité de la tôle d'alliage d'aluminium est de 110 à 145 MPa, un coefficient de sensibilité à la vitesse de déformation de 0,2 % est inférieur ou égal à 0,005, et un coefficient de sensibilité à la vitesse de déformation de 10 % est inférieur ou égal à 0,003 ;
la cuisson est effectuée dans les conditions suivantes : après que la tôle d'alliage d'aluminium ait été stockée pendant 7 jours à température ambiante, la tôle d'alliage d'aluminium est soumise à un traitement de pré-étirage de 2 % au moyen d'une machine d'étirage unidirectionnel, ensuite la rétention de chaleur est effectuée dans un four à bain d'huile à 185°C pendant 20 min ;
le coefficient de sensibilité à la vitesse de déformation est mesuré par le procédé suivant : un essai de traction et un essai de traction à grande vitesse sont effectués sur une tôle cuite, les performances mécaniques des vitesses de déformation de 10-3, 10-2, 10-1, 100, 101, 102 et 103/s sont évaluées séparément par un procédé de vitesse de déformation constante ; le logarithme de la résistance correspondant à une déformation de 0,2 %, le logarithme de la résistance correspondant à une déformation de 10 %, et le logarithme d'une vitesse de déformation sont effectués séparément, c'est-à-dire lnσ-lnξ1, une régression linéaire est effectuée sur une courbe logarithmique double ; la pente de la courbe logarithmique double est le coefficient de sensibilité à la vitesse de déformation.

2. Tôle d'alliage d'aluminium selon la revendication 1, comprenant les compositions suivantes en pourcentage en poids : 0,8 % à 0,85 % de Si, 0,22 % à 0,32 % de Mg, 0,25 % à 0,35 % de Fe, 0,05 % à 0,1 % de Mn, 0,06 % à 0,1 % de Cr, moins de 0,06 % de Cu et moins de 0,15 % des impuretés inévitables en quantité totale, chaque impureté inévitable étant inférieure ou égale à 0,05 %, le reste étant Al et le rapport atomique de Mg à Si étant de (0,30 à 0,47) : 1.

3. Procédé de préparation d'une tôle en alliage d'aluminium de série 6xxx pour un panneau intérieur de capot selon la revendication 1 ou 2, comprenant les étapes suivantes :
étape S1, la soumission des matières premières de l'alliage d'aluminium de série 6xxx au mélange et à la coulée dans un rapport de composition pour obtenir un lingot d'alliage d'aluminium ;
étape S2, la soumission du lingot d'alliage d'aluminium à un traitement d'homogénéisation pour obtenir un lingot homogénéisé ;
étape S3, la décharge directe du lingot homogénéisé d'un four pour le laminage à chaud afin d'obtenir une bobine laminée à chaud, ensuite la soumission de la bobine laminée à chaud à un laminage à froid sur la bobine laminée à chaud pour obtenir une bobine laminée à froid ; et
étape S4, la soumission de la bobine laminée à froid à un traitement de solution de soluté pour obtenir une bobine de solution de soluté, ensuite la soumission de la bobine de solution de soluté à un traitement de pré-vieillissement pour obtenir une bobine de dureté finie, et enfin le tranchage de la bobine de dureté finie pour obtenir la tôle d'alliage d'aluminium de série 6xxx ;
à l'étape S2, le traitement d'homogénéisation est réalisé à une température de 470 à 540°C pendant 4 à 20h ;
à l'étape S3, le laminage à chaud est effectué à une température de laminage initiale de 470 à 540°C et une température de laminage de finition de 250 à 300°C, et l'épaisseur de la bobine laminée à chaud est de 3 à 8 mm ;
à l'étape S3, l'épaisseur de la bobine laminée à froid est de 0,8 à 1,5 mm ;
à l'étape S4, le traitement par solution de soluté comprend : le chauffage de la bobine laminée à froid à 460 à 530°C à une vitesse supérieure à 200°C/min, la réalisation d'une rétention de chaleur pendant 5 s-1 min, ensuite le refroidissement à température ambiante à une vitesse supérieure à 10°C/s ;
à l'étape S4, le traitement de pré-vieillissement comprend : le chauffage de la bobine de solution de soluté à 70 à 100°C dans un four de pré-vieillissement à une vitesse supérieure à 80°C/min, ensuite le déchargement d'une bobine chauffée hors du four de pré-vieillissement pour l'enroulement, une chute de température étant inférieure à 10°C pendant une période allant de la décharge à l'enroulement, ensuite le transfert d'une bobine enroulée vers un four de rétention de chaleur, la réalisation d'une rétention de chaleur à 60 à 90°C pendant 2 à 10 h, ensuite le refroidissement à température ambiante.

4. Procédé de préparation selon la revendication 3, dans lequel, à l'étape S2, le traitement d'homogénéisation est effectué à une température de 500 à 520°C pendant 8 à 14 h.

5. Utilisation de la tôle d'alliage d'aluminium de série 6xxx pour un panneau intérieur d'un capot selon la revendication 1 ou 2 dans un panneau intérieur d'un capot d'une automobile.
